# FASCICULE DE BREVET EUROPEEN

(11) **EP 0 998 655 B1**
(45) Date de publication et mention de la délivrance du brevet: **02.10.2002**
(21) Numéro de dépôt: 99920886.1
(22) Date de dépôt: 19.05.1999
(51) Int. Cl.: F28F 9/00, F28F 9/02, B60K 11/04, B21D 39/03

(54) **ECHANGEUR DE CHALEUR, EN PARTICULIER CONDENSEUR DE VEHICULE AUTOMOBILE, ET PROCEDE POUR SA FABRICATION**
WÄRMETAUSCHER, INSBESONDERE VERFLÜSSIGER FÜR KRAFTFAHRZEUG UND VERFAHREN ZU DESSEN HERSTELLUNG
HEAT EXCHANGER, IN PARTICULAR MOTOR VEHICLE CONDENSER AND METHOD FOR MAKING SAME

(30) Priorité: 25.05.1998 FR 9806546
(43) Date de publication de la demande: 10.05.2000
(73) Titulaire: VALEO THERMIQUE MOTEUR S.A., 78321 La Verrière (FR)
(72) Inventeur: HUBERT, Sylvain, F-51100 Reims (FR)
(86) Numéro de dépôt international: FR9901187
(87) Numéro de publication internationale: WO99061859

(56) Documents cités:
- EP-A- 0 440 400
- EP-A- 0 484 004
- US-A- 5 603 153
- PATENT ABSTRACTS OF JAPAN vol. 018, no. 168 (M-1580), 22 mars 1994 (1994-03-22) & JP 05 332694 A (NIPPONDENSO CO LTD), 14 décembre 1993 (1993-12-14)

## Description

L'invention concerne un échangeur de chaleur, en particulier pour véhicule automobile, ainsi qu'un procédé pour sa fabrication.

Elle se rapporte plus particulièrement à un échangeur de chaleur comprenant au moins une boîte collectrice et au moins une patte de fixation par boîte collectrice, la patte de fixation comprenant une zone de contact concave, de forme adaptée au positionnement de ladite patte de fixation sur une surface périphérique extérieure de la boîte collectrice, ainsi qu'une zone d'attache s'étendant vers l'extérieur.

Un tel échangeur de chaleur peut constituer, par exemple, un condenseur propre à faire partie d'une installation de climatisation pour véhicule automobile. On connaît d'après le document EP-0 440 400 un échangeur de chaleur du type précité.

Un échangeur de chaleur de ce type est fixé, par l'intermédiaire de ses pattes de fixation, à l'environnement qui l'entoure. Dans le cas particulier d'un condenseur de climatisation, celui-ci est habituellement fixé soit à la structure du véhicule, soit au radiateur de refroidissement du moteur dudit véhicule.

De manière classique, les pattes de fixation et la boîte collectrice sont métalliques et assemblées par soudage sous atmosphère d'un gaz inerte. Mais une telle opération de soudage présente une série d'inconvénients : elle est coûteuse, elle nécessite un opérateur qualifié, elle n'est réalisable qu'à une cadence faible, insuffisante au stade industriel, et de plus la qualité de l'assemblage résultant est insatisfaisante.

Il est connu aussi de réaliser l'assemblage par brasage, ce qui oblige à prévoir des moyens pour maintenir et indexer les pattes de fixation sur l'échangeur de chaleur avant et pendant l'opération de brasage, qui s'effectue dans un four approprié.

On connaît, en particulier d'après le document EP-0 440 400, un échangeur de chaleur du type précité, qui comprend un corps d'échangeur de chaleur et des dispositifs de fixation fixés à ce dernier. Ce corps d'échangeur de chaleur comporte des tubes plats et des ailettes empilés de manière alternée, ainsi que deux boîtes collectrices creuses auxquelles sont raccordées, en communication de fluide, les extrémités des tubes plats.

Les dispositifs de fixation illustrés dans ce document comprennent chacun une partie de contact, de forme concave, s'adaptant à la surface périphérique extérieure d'une boîte collectrice et placée en étroit contact avec cette dernière, ainsi qu'une partie de fixation s'étendant vers l'extérieur à partir d'une extrémité de la partie concave et formant un crochet replié.

Le document précité enseigne que ce crochet replié est inséré entre deux tubes adjacents de sorte que les dispositifs de fixation sont soudés au corps de l'échangeur de chaleur et sont rendus solidaires de ce dernier.

Dans une variante décrite dans le document précité, un trou est percé dans la boîte collectrice creuse, tandis que la patte de fixation est poinçonnée de manière à refouler de la matière et former un cône de centrage dans le trou ainsi réalisé. Dans une autre variante, un trou est percé dans la patte de fixation et c'est la boîte collectrice creuse qui est poinçonnée.

L'échangeur de chaleur selon le document précité présente un certain nombre d'inconvénients. Ainsi, la patte de fixation est susceptible de micro-déplacements indésirables pouvant provoquer une mauvaise étanchéité ainsi que des bavures au moment du soudage. De plus, la présence de perforations soit dans la boîte collectrice, soit dans la patte de fixation peut conduire à des fuites et/ou à des infiltrations. En outre, la nécessité d'un crochet d'ancrage pour limiter les déplacements relatifs de la patte de fixation et de la boîte collectrice avant l'opération de soudage, complique la réalisation de la patte de fixation et son assemblage.

L'invention a notamment pour but de surmonter les inconvénients précités.

Elle vise en particulier à procurer un échangeur de chaleur dans lequel la ou chaque patte de fixation peut être pré-assemblée et maintenue dans une position précise avant et pendant l'opération d'assemblage définitif réalisée par brasage ou soudage.

Elle propose à cet effet un échangeur de chaleur du type défini en introduction, dans lequel la zone de contact concave de la patte de fixation présente une région centrale d'épaisseur réduite par rapport à l'épaisseur normale de la patte de fixation, de manière à réaliser une liaison mécanique par clinchage, solidarisant ladite zone de contact concave de la patte de fixation à ladite surface périphérique extérieure de la boîte collectrice.

Ainsi, la patte de fixation est pré-assemblée à la boîte collectrice par une opération dite de clinchage, réalisée par emboutissage et pressage.

Ce clinchage réalise une liaison mécanique par coopération de formes entre la boîte collectrice et la patte de fixation. Il permet un maintien et une indexation parfaits avant et pendant l'opération de brasage au four. Le risque de micro-déplacements est ainsi évité de façon particulièrement efficace.

En outre, cette opération peut se faire de façon particulièrement rapide, sans nécessiter d'étape de perçage comme dans l'art antérieur.

Selon encore un mode particulier de l'invention, la boîte collectrice de l'échangeur de chaleur présente, dans la zone de contact concave avec la patte de fixation, un évidement borgne délimité par un fond supérieur qui est relié à une paroi latérale de l'évidement par un congé concave sur une profondeur choisie.

De préférence, la patte de fixation comprend au moins un trou réalisé au préalable pour faciliter la réalisation ultérieure de la région centrale d'épaisseur réduite, grâce au fait que la matière de la patte va combler partiellement ce trou en limitant la déformation de la patte.

L'invention s'applique en particulier à un échangeur de chaleur comprenant deux boîtes collectrices et au moins une patte de fixation par boîte collectrice.

Un tel échangeur peut être réalisé notamment sous la forme d'un condenseur.

Sous un autre aspect, l'invention concerne un procédé de fabrication d'un tel échangeur de chaleur comprenant, pour chaque patte de fixation, les étapes consistant à positionner ladite zone de contact concave de la patte de fixation sur la surface périphérique externe d'une boîte collectrice, puis à clincher la patte de fixation sur la boîte collectrice, et enfin à solidariser définitivement l'ensemble, par exemple par brasage au four.

Dans la description qui suit, faite seulement à titre d'exemple, on se réfère aux dessins annexés, sur lesquels :
- la figure 1 est une vue de face d'un échangeur de chaleur, du type condenseur, réalisé selon l'invention;
- la figure 2 est une vue de dessus de l'échangeur de chaleur de la figure 1;
- la figure 3 est une vue partielle en coupe montrant une boîte collectrice et une patte de fixation avant assemblage;
- la figure 4 est une vue partielle de dessus d'une patte de fixation, représentée plane, dans la région de sa zone de contact;
- la figure 5 est une vue en coupe selon la ligne V-V de la figure 4;
- la figure 6 est une vue analogue à la figure 3, après assemblage par clinchage ; et
- la figure 7 est un détail, représenté à échelle agrandie, de la figure 6.

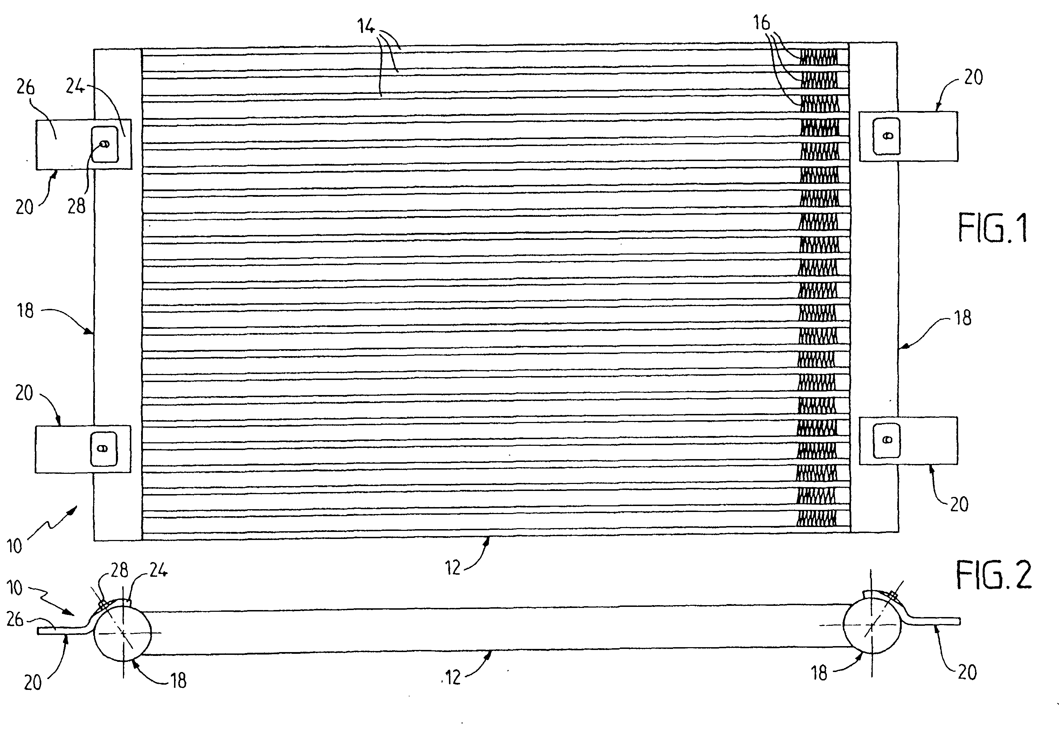

On se réfère tout d'abord aux figures 1 et 2 qui représentent un échangeur de chaleur 10 réalisé ici sous la forme d'un condenseur propre à faire partie d'une installation de climatisation de véhicule automobile. Le condenseur 10 est généralement constitué d'un faisceau 12 formé d'un empilement alterné de tubes plats 14 et d'ailettes 16 de forme ondulée. Les tubes 14 du faisceau 12 sont reliés à deux boîtes collectrices 18, dans lesquelles ils débouchent par des fentes appropriées. L'ensemble est propre à être traversé par un fluide réfrigérant sous forme gazeuse qui est condensé par échange thermique avec un flux d'air qui balaie le faisceau, d'une manière en soi connue.

Le condenseur 10 comporte quatre pattes de fixation 20 fixées par paires sur les deux boîtes collectrices 18. Ces pattes sont destinées à permettre la fixation du condenseur 10 à son environnement, par exemple sur la structure d'un véhicule automobile ou sur le radiateur de refroidissement du moteur dudit véhicule.

Dans l'exemple, les tubes 14, les ailettes 16, les boîtes collectrices 18 et les pattes de fixation 20 sont formées à partir d'une tôle métallique à base d'aluminium.

Les boîtes collectrices 18 ont une forme tubulaire et sont, dans l'exemple, délimitées par une paroi cylindrique circulaire présentant une surface périphérique extérieure 22. Chacune des pattes de fixation 20 comprend une zone de contact concave 24 de forme adaptée au positionnement de ladite patte de fixation sur la surface périphérique extérieure 22 de la boîte collectrice. Chacune des pattes comporte en outre une zone d'attache 26 s'étendant vers l'extérieur et propre à être fixée, de façon appropriée, à l'environnement du condenseur.

Une liaison mécanique 28 réalisée par clinchage solidarise la zone de contact concave 24 de la plaque de fixation 20 à la surface périphérique extérieure 22 de la boîte collectrice.

Le clinchage est une opération mécanique consistant à déformer localement la matière de deux pièces métalliques, par exemple de deux tôles, disposées l'une contre l'autre pour les solidariser mécaniquement. Une telle opération comprend essentiellement un emboutissage et un pressage qui réalisent une liaison mécanique entre les deux pièces par coopération de formes.

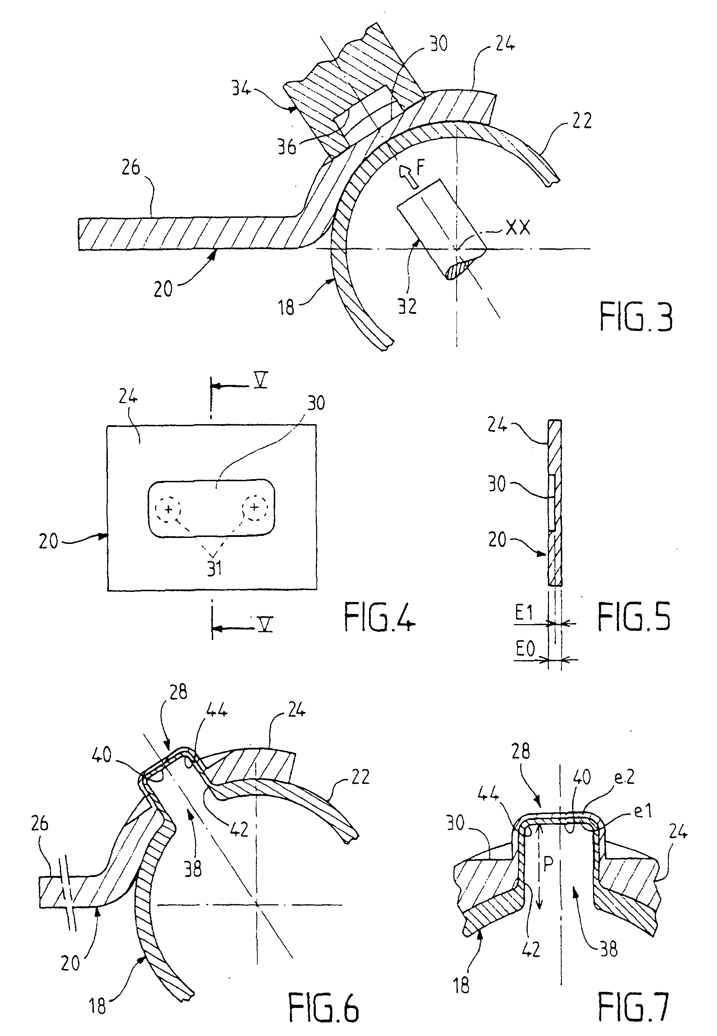

On se réfère maintenant aux figures 3 à 7 pour décrire plus particulièrement l'assemblage d'une patte de fixation sur une boîte collectrice par une opération de clinchage.

La zone de contact 24 de la patte de fixation comporte une région centrale 30, dans l'exemple de forme rectangulaire, ayant une épaisseur réduite E1 par rapport à l'épaisseur normale E0 de la patte (figure 5). En effet, l'épaisseur de la patte de fixation, dans la région qui doit être déformée par clinchage, ne doit pas être trop importante, car alors l'opération de clinchage serait rendue délicate. Il est donc souhaitable de prévoir une région centrale 30 d'épaisseur réduite, tout en conservant une épaisseur plus grande pour le reste de la patte de fixation, afin de lui conférer une bonne résistance mécanique.

La région centrale 30 d'épaisseur réduite est avantageusement obtenue par une déformation à la presse de la patte de fixation. A cet égard, il est avantageux de réaliser au préalable, c'est à dire avant déformation à la presse, au moins un trou traversant l'épaisseur de la patte dans la région où doit être formée la région centrale 30.

Un tel trou a pour but de faciliter la réalisation de la région centrale d'épaisseur réduite par le fait que la matière de la patte va combler partiellement ce trou en limitant la déformation de la patte. Ce comblement s'effectue lors du pressage par fluage de la matière vers le trou.

Ainsi, dans l'exemple, on peut prévoir, de manière facultative, deux trous 31 (représentés en traits interrompus sur la figure 4) de part et d'autre de l'endroit où sera effectué le clinchage.

Comme on peut le voir sur la figure 3, la zone de contact concave 24 de la patte de fixation 20 est appliquée extérieurement contre la surface périphérique extérieure 22 de la boîte collectrice 18 dans une position choisie. On réalise ensuite une opération de clinchage en utilisant un poinçon 32 et une matrice d'emboutissage 34 susceptibles d'être rapprochés l'un de l'autre. Dans l'exemple, la matrice 34 est appliquée contre la région centrale 30, alors que le poingon 32 est déplacé perpendiculairement à l'axe longitudinal X-X de la boîte collectrice, à partir de l'intérieur de la boîte collectrice, et dans la direction de la matrice d'emboutissage 34, comme montré par la flèche F sur la figure 3. La matrice 34 comporte une partie creuse 36 de forme adaptée au poinçon 32 et disposée en vis à vis dudit poinçon.

Le poinçon 32 est déplacé dans la direction de la flèche F par un moyen mécanique approprié ce qui provoque une déformation locale de la paroi de la boîte collectrice et de la région centrale 30 de la zone de contact concave de la patte de fixation.

Le déplacement du poinçon 32 provoque successivement un emboutissage et un pressage de la paroi de la boîte collectrice et de la région centrale 30 d'épaisseur réduite de la patte de fixation.

Il en résulte que la boîte collectrice 14 présente, dans la zone de contact concave avec la patte de fixation, un évidement borgne 38 (figures 6 et 7) délimité par un fond supérieur 40 de forme circulaire relié à une paroi latérale 42 de l'évidement par un congé concave 44 sur une profondeur choisie P. Dans la région du fond 40 et de la paroi latérale 42, la boîte collectrice présente une paroi d'épaisseur réduite e1, tandis que la région centrale 30 de la patte de fixation présente une épaisseur réduite e2 (voir détail à échelle agrandie sur la figure 7).

La patte de fixation se trouve ainsi pré-assemblée à la boîte collectrice dans une position indexée choisie, ce pré-assemblage se faisant par une simple opération de clinchage n'entraînant aucune perforation dans la boîte collectrice ou dans la patte de fixation. Un fois les pattes de fixation assemblées par clinchage sur les boîtes collectrices correspondantes, l'ensemble peut être brasé dans un four approprié, sans risque d'un déplacement, même minime, de la patte de fixation par rapport à la boîte collectrice.

Ainsi, le procédé de l'invention assure l'indexation et le maintien de la patte de fixation sur la boîte collectrice, en garantissant une parfaite immobilisation temporaire non seulement pendant le convoyage du condenseur vers le four de brasage, mais aussi pendant l'opération de brasage, et cela sans nécessiter le recours habituel à des moyens de maintien.

Grâce au procédé de l'invention, on confère une étanchéité et une tenue mécanique remarquables au condenseur ainsi produit en empêchant tout micro-déplacement relatif des pattes de fixation avant et pendant le brasage.

Ainsi, bien que l'invention ait été décrite en référence particulière à un condenseur de climatisation pour véhicule automobile, elle peut être appliquée à d'autres types d'échangeurs de chaleur.

## Revendications

1. Echangeur de chaleur comprenant au moins une boîte collectrice (18) et au moins une patte de fixation (20) par boîte collectrice, la patte de fixation (20) comprenant une zone de contact concave (24), adaptée au positionnement de ladite patte de fixation sur une surface périphérique extérieure (22) de la boîte collectrice, ainsi qu'une zone d'attache (26) s'étendant vers l'extérieur,
**caractérisé en ce que** la zone de contact concave (24) de la patte de fixation (20) présente une région centrale (30) d'épaisseur réduite (E1) par rapport à l'épaisseur normale (E0) de la patte de fixation, de manière à réaliser une liaison mécanique (28) par clinchage, solidarisant ladite zone de contact (24) de la patte de fixation (20) à ladite surface périphérique extérieure (22) de la boîte collectrice (18).

2. Echangeur de chaleur selon la revendication 1, **caractérisé en ce que** la boîte collectrice (18) présente, dans la zone de contact concave (24) avec la patte de fixation (20), un évidement borgne (38) délimité par un fond supérieur (40) relié à une paroi latérale (42) de l'évidement par un congé concave (44) sur une profondeur choisie (P).

3. Echangeur de chaleur selon l'une des revendications 1 et 2, **caractérisé en ce que** la patte de fixation (20) comprend au moins un trou réalisé au préalable pour faciliter la réalisation ultérieure de la région centrale (30) d'épaisseur réduite, grâce au fait que la matière de la patte va combler partiellement ce trou en limitant la déformation de la patte.

4. Echangeur de chaleur selon l'une des revendications 1 à 3, **caractérisé en ce qu'**il comprend deux boîtes collectrices (18) et au moins une patte de fixation (20) par boîte collectrice (18).

5. Echangeur de chaleur selon l'une des revendications 1 à 4, **caractérisé en ce qu'**il réalisé sous la forme d'un condenseur.

6. Procédé de fabrication d'un échangeur de chaleur selon l'une des revendications 1 à 5, **caractérisé en ce qu'**il comprend, pour chaque patte de fixation (20), les étapes consistant à :
- positionner la zone de contact concave (24) de la patte de fixation (20) sur la surface périphérique extérieure (22) d'une boîte collectrice (18) ;
- clincher la patte de fixation (20) sur la boîte collectrice (18) ; et
- solidariser définitivement l'ensemble, par exemple par brasage au four.

## Patentansprüche

1. Wärmetauscher mit mindestens einem Sammelgehäuse (18) und mindestens einer Befestigungsnase (20) pro Sammelgehäuse, wobei die Befestigungsnase (20) eine konkave Kontaktzone (24), die zur Positionierung der Befestigungsnase an einer Außenumfangsfläche (22) des Sammelgehäuses ausgeführt ist, sowie eine sich nach außen erstreckende Befestigungszone (26) umfaßt,
**dadurch gekennzeichnet, daß** die konkave Kontaktzone (24) der Befestigungsnase (20) einen mittleren Bereich (30) mit verminderter Dicke (E1) bezüglich der normalen Dicke (E0) der Befestigungsnase aufweist, um eine mechanische Quetschverbindung (28) herzustellen, die die Kontaktzone (24) der Befestigungsnase (20) mit der Außenumfangsfläche (22) des Sammelgehäuses (18) fest verbindet.

2. Wärmetauscher nach Anspruch 1, **dadurch gekennzeichnet, daß** das Sammelgehäuse (18) in der konkaven Kontaktzone (24) mit der Befestigungsnase (20) eine Sackausnehmung (38) aufweist, die durch einen oberen Boden (40) begrenzt wird, der durch eine konkave Kehle (44) an einer gewählten Tiefe (P) mit einer Seitenwand (42) der Ausnehmung verbunden ist.

3. Wärmetauscher nach Anspruch 1 oder 2, **dadurch gekennzeichnet, daß** die Befestigungsnase (20) mindestens ein vorher ausgebildetes Loch aufweist, um die spätere Herstellung des mittleren Bereichs (30) mit verminderter Dicke dadurch zu erleichtern, daß das Material der Nase dieses Loch teilweise ausfüllt und so die Verformung der Nase begrenzt.

4. Wärmetauscher nach einem der Ansprüche 1 bis 3, **dadurch gekennzeichnet, daß** er zwei Sammelgehäuse (18) und mindestens eine Befestigungsnase (20) pro Sammelgehäuse (18) aufweist.

5. Wärmetauscher nach einem der Ansprüche 1 bis 4, **dadurch gekennzeichnet, daß** er in Form eines Kondensators ausgebildet ist.

6. Verfahren zur Herstellung eines Wärmetauschers nach einem der Ansprüche 1 bis 5, **dadurch gekennzeichnet, daß** man für jede Befestigungsnase (20):
- die konkave Kontaktzone (24) der Befestigungsnase (20) an der Außenumfangsfläche (22) eines Sammelgehäuses (18) positioniert;
- die Befestigungsnase (20) am Sammelgehäuse (18) anquetscht; und
- die Anordnung zum Beispiel durch Ofenlöten endgültig fest verbindet.

## Claims

1. Heat exchanger comprises at least one collector box (18) and at least one fixing lug (20) per collector box, the fixing lug (20) comprising a concave contact region (24) designed for positioning the said fixing lug on an external peripheral surface (22) of the collector box, and an attachment region (26) extending outwards,
**characterized in that** the concave contact region (24) of the fixing lug (20) has a central region (30) of lesser thickness (E1) by comparison with the normal thickness (E0) of the fixing lug, so as to produce a mechanical connection (28) by clinching, securing the said contact region (24) of the fixing lug (20) to the said outer peripheral surface (22) of the collector box (18).

2. Heat exchanger according to Claim 1, **characterized in that** the collector box (18) has, in the concave region (24) of contact with the fixing lug (20), a blind recess (38) delimited by an upper end wall (40) connected to a side wall (42) of the recess by a fillet (44) which is concave over a chosen depth (P).

3. Heat exchanger according to one of Claims 1 and 2,
**characterized in that** the fixing lug (20) comprises at least one hole made beforehand to facilitate the subsequent production of the central region (30) of reduced thickness, by virtue of the fact that the material of the lug can partially fill this hole, thereby limiting the deformation of the lug.

4. Heat exchanger according to one of Claims 1 to 3,
**characterized in that** it comprises two collector boxes (18) and at least one fixing lug (20) per collector box (18).

5. Heat exchanger according to one of Claims 1 to 4,
**characterized in that** it is produced in the form of a condenser.

6. Method of manufacturing a heat exchanger according to one of Claims 1 to 5, **characterized in that** it comprises, for each fixing lug (20), the steps consisting in:
- positioning the concave contact region (24) of the fixing lug (20) over the outer peripheral surface (22) of a collector box (18);
- clinching the fixing lug (20) onto the collector box (18); and
- definitively securing the assembly, for example using furnace brazing.
